# EUROPEAN PATENT SPECIFICATION

(11) **EP 1 837 570 B1**
(45) Date of publication and mention of the grant of the patent: **23.12.2009**
(21) Application number: 07104006.7
(22) Date of filing: 13.03.2007
(51) Int. Cl.: F16L 3/04, F16L 3/13

(54) **Piece to fix tubular elements**
Bauteil zur Befestigung von rohrförmigen Elementen
Pièce pour fixer des éléments tubulaires

(30) Priority: 22.03.2006 ES 200600648 U
(43) Date of publication of application: 26.09.2007
(73) Proprietor: Ceravalls Pujol, Ramon, 08211 Castellar del Valles (ES); Lopez Puche, Nuria, 08211 Castellar del Valles (ES)
(72) Inventor: Ceravalls Pujol, Ramon, 08211 Castellar del Valles (ES); Lopez Puche, Nuria, 08211 Castellar del Valles (ES)
(74) Representative: Ponti Sales, Adelaida

(56) References cited:
- DE-U1- 8 508 671
- DE-U1- 29 716 745
- ES-A1- 2 165 794
- FR-A- 2 436 903
- NL-C2- 1 001 624
- US-A- 6 073 891
- US-A1- 2005 120 652

## Description

The present invention refers to a piece to fix tubular elements or ducts to a support surface, such as a wall or ceiling.

### Background of the invention

There are known pieces to fix tubular elements such as conducts or pipes of circular cross-section, to a support surface.

One of these pieces comprises a core or central part, a lateral hook, and a rod or axle which is introduced inside a hole provided in a support surface to fix the piece.

The lateral hook of the piece is flexible and it is adapted to fix a tubular element which is inserted inside said hook. The entrance mouth which defines de hook is narrower than the diameter of the tubular element to be fixed, so that when the tubular element is inserted in the hook, this hook bends by resilient deformation and the element remains fixed by the pressure exerted by said hook against the external surface of said element.

The internal wall of the hook extends tangentially with respect to a vertical lateral wall of the core, describing a circumference arc up to the free end of the hook.

Thanks to this arrangement, the tubular element can be inserted in the hook easily without the necessity to exert a high pressure. However, said piece presents the drawback that it does not provide a satisfactory axial and traction fixation of the element.

This is because the contact surface between the internal wall of the arm and the external surface of the tubular element is relatively reduced, and because the pressure exerted by the hook against the tubular element is also limited.

Another kind of known piece of the state of the art is disclosed in the Spanish patent ES-A-2 165 794. Said piece comprises a core, at least a lateral hook to fix tubular ducts, and a passing through central hole adapted to be internally crossed by a bar or bolt which fixes the piece to a hole provided in a support surface.

The hook of this piece comprises an entrance hook narrower than the kind of piece disclosed previously. This makes that the angle of the circumference arc is greater, and then the surface of the arm in contact with the tube increases and enhances the fixation of the tube.

However, it has been proved that this piece has the drawback that the insertion of the tubular element inside the arm or hook is difficult, because of the narrow mouth with respect to the diameter of the tubular element.

Furthermore, the narrow mouth also produces high stresses in the piece and in the tubular element itself when it is inserted inside the hook, and they can damage it.

DE 297 16 745 U and FR 2 436 903 show similar pieces.

### Description of the invention

The object of the present invention is to solve the drawbacks of the known devices of the art, providing a piece to fix tubular elements with the features of claim 1.

Thanks to these features, the piece of the invention permits to obtain a good fixation of the tubular element without a great force being necessary to insert said element inside the hook to fix it to the piece.

Thanks to the claimed range of angles, the entrance mouth of the hook of the piece of the invention is sufficiently narrow to obtain a good fixation of the tubular element, without making the insertion of the element inside the hook difficult.

The inclination of the internal wall of the hook with respect to the lateral wall of the central part of the piece at its joining point configures an edge which helps to enhance the fixation of the element.

According to the invention, the distance between the lateral wall and a plane parallel to said lateral wall which passes through the second end of the internal wall is comprised between 1.75 and 1.9 times the radius of said circumference arc.

Alternatively, the distance between the lateral wall and a plane parallel to said lateral wall which passes through the second end of the internal wall is comprised between 1.78 and 1.82 times the radius of said circumference arc.

Thanks to this configuration, the insertion of the tubular element inside the hook is easier.

Advantageously, the hook comprises a longitudinal reinforcing ridge at is external wall.

This ridge provides to the hook a greater stiffness, which increases the force exerted by it against the external surface of the tubular element when it is retained by the hook.

Preferably, said rod comprises a plurality of aligned perimeter discs of greater diameter than the diameter of the hole, and at least two aligned perimeter discs of a diameter substantially the same as that of the hole placed at the free end of the rod.

Said discs permit to place the rod of the piece in a hole provided at a support surface before the piece is put up and without the necessity to holding it with the hands. The discs also enhance the fixation of the piece to the hole when it has been put up.

Advantageously, the piece is of plastic material.

### Brief description of the drawings

To facilitate the description of that disclosed previously some drawings are attached, in which, diagrammatically and only as a non-limitative example, a practical case of embodiment of the invention is shown, in which:
Fig. 1 is a frontal elevation view of an embodiment of a piece according to the present invention;
Figs. 2 and 3 are two perspective views, upper and lower, of the piece according to the invention, respectively;
Figs. 4 and 5 are two detail views of the hook and the central part of the piece;
Figs. 6-8 are views which show the fixation of the piece according to the present invention to a tubular element;
Figs. 9 and 10 are views which show the fixation of the piece according to the invention to a support surface.

### Description of a preferred embodiment

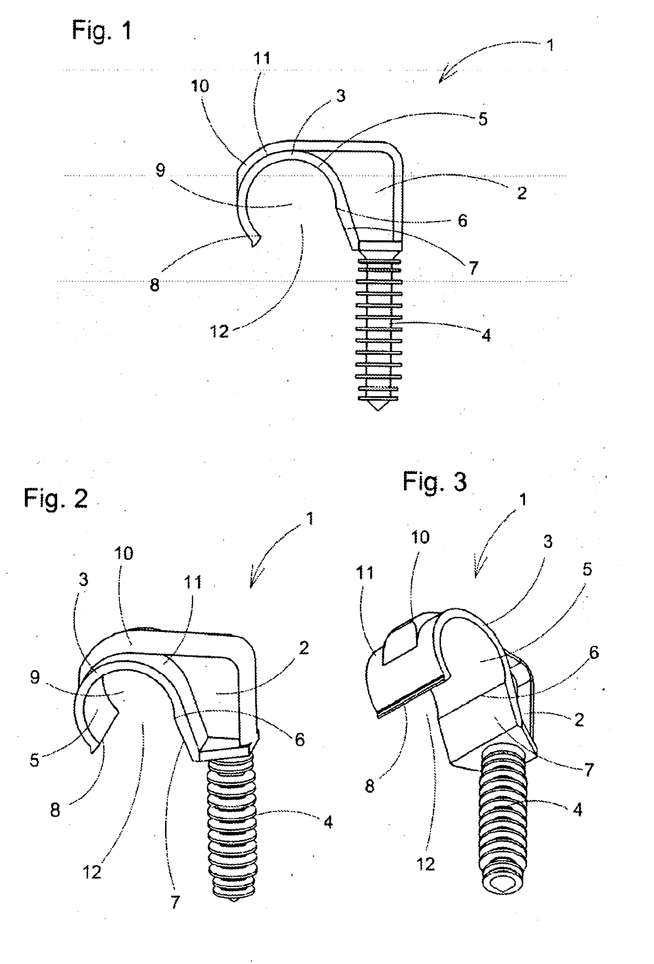

In Figs. 1-3 an embodiment of a piece 1 according to the present invention is shown. The piece 1 comprises a central part 2 or core, a hook 3 provided at one of the sides of said central part 2, and a rod 4 which extends from the lower part of the central part 2.

The hook 3 comprises a circumference arc-shaped internal wall 5 which extends from a first end 6 located in a lateral wall 7 of the central part 2 to a second end 8 located at the free end of the hook 3, and which defines an internal housing 9.

The piece 1 also comprises a longitudinal reinforcing ridge 10 at the external wall 11 of the hook 3 which extends from the upper part of the central part 2 along a stretch of the hook 3.

The function of the hook 3 is to fix a tubular element, e.g. a tube, which is inserted through the entrance space or mouth 12 formed by the ends 6 and 8 inside the housing 9.

The entrance mouth 12 of the hook 3 is narrower than the external diameter of the tubular element to be fixed. The hook 3 is flexible, and bends outwardly, so that it permits the element to be inserted through the mouth 12 by resilient deformation. When the tubular element is placed inside the housing, the hook 3 embraces part of the perimeter of the tubular element, pressing against its external surface, as will be explained later.

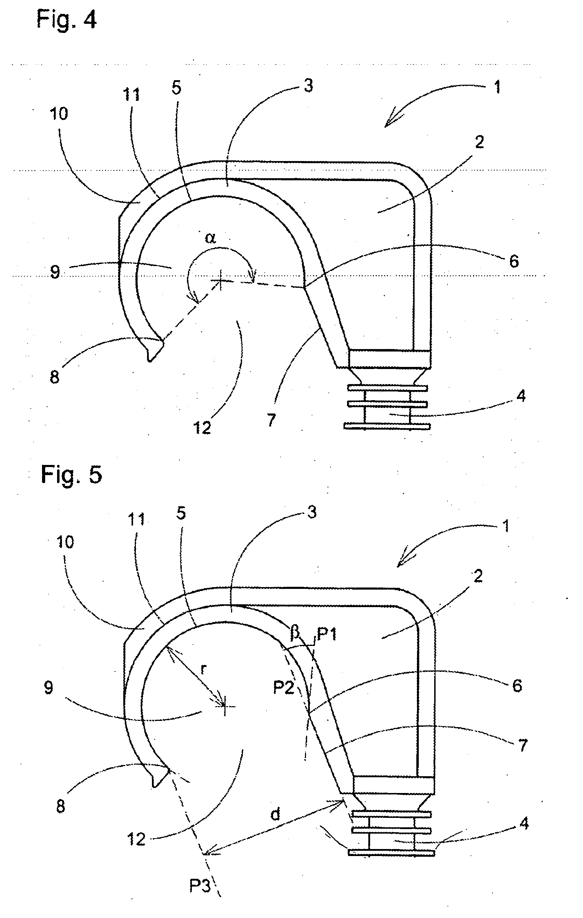

In Figs. 4 and 5 is disclosed with detail the geometry of the piece 1 of the invention.

As it can be seen, the internal wall 5 of the hook 3 has a circumference arc shape, and it extends from a firs end 6 located in a straight lateral wall 7 of the central part 2 and a second end 8 located close to the free end of the hook 3. The angle α of said circumference arc is comprised between 225 and 240 degrees.

The lateral wall 7 of the central part 2 of the piece 1 is inclined with respect to the internal wall 5 of the hook 3 at the first end 6. A plane P1 tangent to the internal wall 5 of the hook 3 in said first end 6 and a plane P2 parallel to the lateral wall 7 of the central part 2 form an angle β between them different from 0 degrees (they are not parallel). Thanks to this feature, an edge is formed in the first end 6 that enhances the fixation of the tubular element which is inserted in the housing 9 of the hook 3, as it will be shown later.

Preferably, the distance d between the lateral wall 7 and a plane P3 parallel to said lateral wall 7 which passes through the end 8 of the internal wall 5 of the hook is comprised between 1.75 and 1.9 times, and more preferably between 1.78 and 1.82 times the radius r of the circumference arc defined by said internal wall 5. Thanks to these distances d, the width of the entrance mouth 12 and the inclination of the lateral wall 7 with respect to the mouth 12 are the most suitable to permit an easier insertion of the tube 13 inside the housing 9.

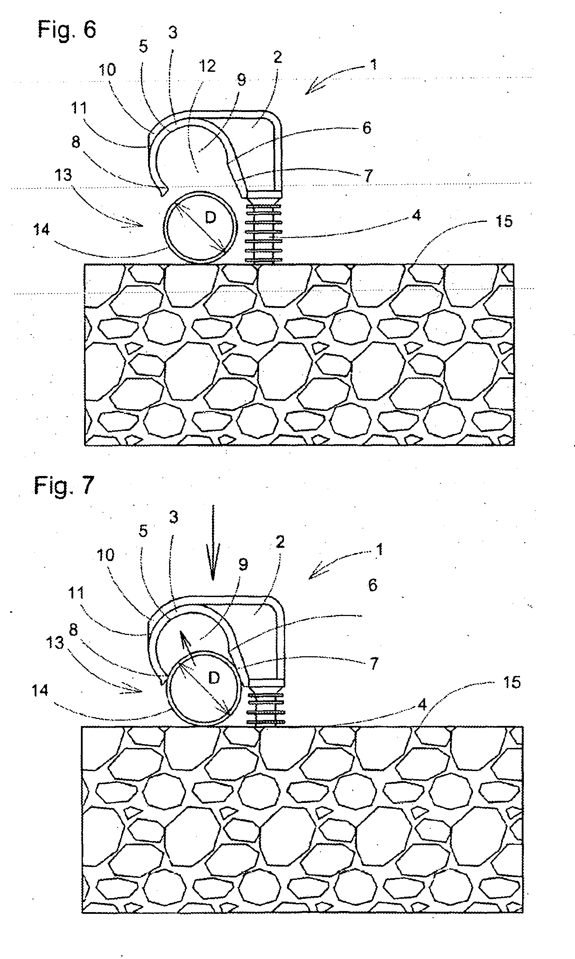

In Figs. 6-8 the fixation of a tubular element to the piece of the invention is shown.

The piece 1 is fixed to a hole (not shown in Figs. 6-8) provided at a support surface 15, inserting the rod 4 inside it.

The fixation of the tubular element or tube 13 to the piece is carried out inserting the tube 13 inside the housing 9 formed by the hook 3 when the piece 1 is put up in the support surface 15.

As it can be seen, the lateral wall 7 of the central part 2 of the piece comprises a flat surface which is tilted with respect to the vertical axis of the piece 1. Said lateral wall 7 guides the tube 13 to the entrance mouth 12 of the hook 3 (Fig. 7). As described previously, the entrance mouth 12 of the hook 3 is narrower than the external diameter D of the tube 13, so that the hook 3 is resiliently deformed when the tube 13 is inserted in the housing 9. When the tube 13 is inside the housing 9, the internal wall 5 of the hook 3 remains in contact with the perimeter external surface 14 of the tube 13, and the hook presses and retains said tube 13.

Thanks to the angle of the circumference arc of the internal wall 5 of the hook 3 and to the aperture of the entrance mouth 12 of the piece 1 of the invention, the tube can be inserted easily inside the housing 9 of the hook 3, obtaining at the same time a good fixation of the tube 13, because the external surface 14 of the tube 13 in contact with the internal wall 5 of the hook is sufficient to provide a suitable fixation force.

On the other hand, the inclination between the internal wall 5 of the hook 3 and the lateral wall 7 of the central part 2 in its joining zone configures a retention edge in the first end 6. This edge, which helps to retain the tube 13 inside the hook 3, also defines a recess or cavity adjacent to the straight lateral wall 7 which facilitates the insertion of the tube 13 inside the hook 3, and it permits to increase the extension of the internal wall 5 of the hook 3, and then the contact surface between both elements.

The reinforcing ridge 10 presents a thickness approximately the same than the hook 3, and it increases the flex resistance of the hook 3, so the it exerts more pressure to the tube 13, enhancing its fixation.

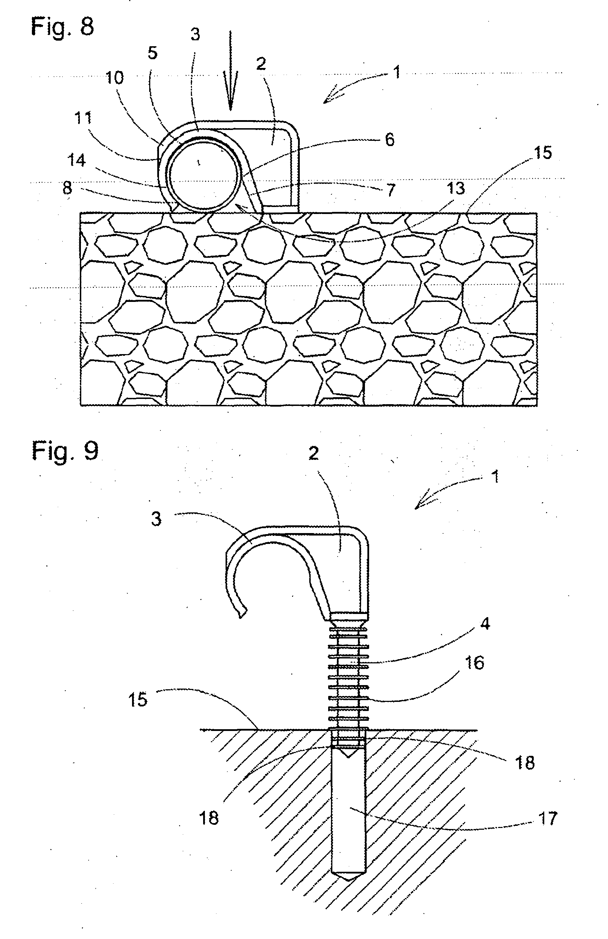

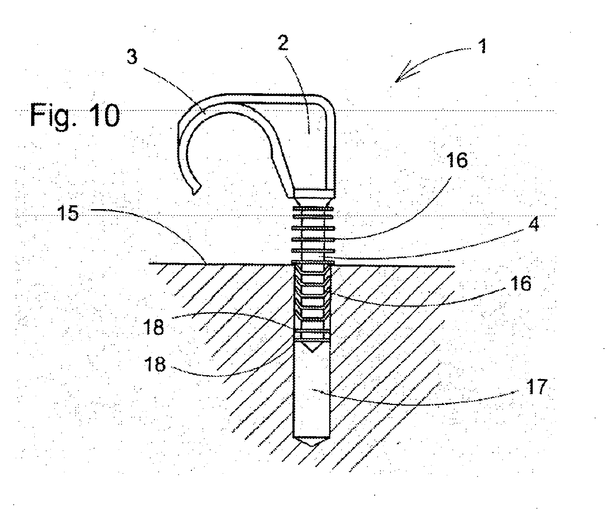

In Figs. 9 and 10 the fixation of the piece 1 of the present invention to a support surface 15 is shown.

The rod 4 of the piece 1 comprises a plurality of perimeter discs 16 aligned according to the longitudinal axis of the rod 4 and distributed along it equidistantly. Said discs 16 have a diameter greater than the diameter of a hole 17 provided at the support surface 15 inside which the rod 4 will be inserted to fix the piece to the support surface 15.

At least two of the discs 18 placed closer to the free end of the rod 4 comprise a diameter which is substantially the same than that of the hole 17.

Thanks to the discs 18 of lower diameter, the piece 1 can be placed in first instance in the hole 17 (Fig. 9) before it is put up without being necessary to be hold. Furthermore, the discs 18 permit the rod 4 of the piece 1 to be aligned with respect to the longitudinal axis of the hole 17.

When the piece 1 is put up and the rod 4 is inserted inside the hole 17 (Fig. 10), the discs 16 of greater diameter are folded so that they exerts a pressure against the walls of the hole 17, retaining the piece 1 and preventing the rod 4 to exit from the hole 17.

The piece of the invention will be of any material, preferably plastic material, which will be sufficiently flexible and resistant to hold firmly tubular elements.

The hook 3 of the piece 1 could be used to hold tubes of different diameters. E.g., a single piece 1 could be used to fix tubes of 20 or 22 millimeters of external diameter.

Even though in the embodiment shown the piece 1 comprises a single lateral hook 3, it could also comprise two hooks, one at each side of the central part 2.

On the other hand, even though in the embodiment shown the hook 3 is oriented downwardly, with its entrance mouth 12 adjacent to the support surface 15 to which the piece 1 is fixed, the hook 3 could also be oriented upwardly, with its entrance mouth 12 directed in a inverted direction to the support surface 15.

## Claims

1. Piece (1) to fix tubular elements (13) of substantially round circumference in contact with a substantially flat support surface (15), comprising a central part (2) and at least one hook (3), said hook (3) comprising an internal wall (5) with a circumference arc shape which extends between a first end (6) placed at a lateral wall (7) of the central part (2) and a second end (8) placed at the free end of the hook (3), wherein the internal wall (5) of the hook (3) and the lateral wall (7) of the central part (2) are inclined one to each other at said first end (6), the piece comprising a rod (4) for fixing it in a hole of a support surface (15), said rod extending from the lower part of said central part for fixing it to a support surface (15), **characterized in that** the angle (α) of said circumference arc is comprised between 225 and 240 degrees and **in that** the hook is arranged so that the free end (8) of the hook (3) is capable of contacting said support surface (15) when the rod is fully inserted in said surface (15) for fixing a tubular element (13), said lateral wall (7) comprising a flat surface being tilted with respect to the axis of the rod (4) and the distance (d) between the lateral wall (7) and a plane parallel to said lateral wall (7) which passes through the free end (8) of the internal wall (5) of the hook is comprised between 1,75 and 1,9 times the radius of said circumference arc.

2. Piece (1) according to anyone of the previous claims, **characterized in that** the distance (d) between the lateral wall (7) and a plane (P3) parallel to said lateral wall (7) which passes through the second end (8) of the internal wall (5) is comprised between 1.78 and 1.82 times the radius (r) of said circumference arc.

3. Piece (1) according to anyone of the previous claims, **characterized in that** the hook (3) comprises a longitudinal reinforcing ridge (10) at its external wall (11).

4. Piece (1) according to claim 1, **characterized in that** said rod (4) comprises a plurality of aligned perimeter discs (16) of greater diameter than the diameter of the hole (17), and at least two aligned perimeter discs (18) of a diameter substantially the same as that of the hole (17) placed at the free end of the rod.

5. Piece (1) according to anyone of the previous claims, **characterized in that** it is of plastic material.

## Patentansprüche

1. Bauteil (1) zur Befestigung von rohrförmigen Elementen (13) mit einem im Wesentlichen runden Umfang, welche sich im Kontakt mit einer im Wesentlichen ebenen Trägeroberfläche (15) befinden, mit einem Mittenabschnitt (2) und mindestens einem Haken (3), wobei der Haken (3) eine innere Wand (5) mit einer Form eines Bogens des Umfangs aufweist, welcher sich zwischen einem ersten Ende (6), das an einer Seitenwand (7) des Mittenabschnitts (2) angeordnet ist, und einem zweiten Ende (8), das an einem freien Ende des Hakens (3) angeordnet ist, erstreckt, wobei die innere Wand (5) des Hakens (3) und die Seitenwand (7) des Mittenabschnitts (2) an dem ersten Ende (6) zueinander geneigt sind, wobei das Bauteil zur Befestigung in einer Bohrung der Trägeroberfläche (15) einen Stab (4) aufweist, und wobei sich der Stab zur Befestigung an der Trägeroberfläche (15) von einem unteren Teil des Mittenabschnitts weg erstreckt, **dadurch gekennzeichnet, dass** der Winkel (α) des Bogens des Umfangs zwischen 225 und 240 Grad liegt, und dass der Haken derart angeordnet ist, dass das freie Ende (8) des Hakens (3) dazu geeignet ist, die Trägeroberfläche (15) zu berühren, wenn der Stab vollständig in die Oberfläche (15) eingeführt ist, um ein rohrförmiges Element (13) zu befestigen, wobei die Seitenwand (7) eine ebene Oberfläche aufweist, welche in Bezug auf eine Achse des Stabs (4) geneigt ist, und wobei der Abstand (d) zwischen der Seitenwand (7) und einer Ebene, welche parallel zu der Seitenwand (7) ist und durch das freie Ende (8) der inneren Wand (5) des Hakens verläuft, zwischen 1,75 und 1,9 mal dem Radius des Bogens des Umfangs beträgt.

2. Bauteil (1) nach einem der vorhergehenden Ansprüche, **dadurch gekennzeichnet, dass** der Abstand (d) zwischen der Seitenwand (7) und einer Ebene (P3), welche parallel zu der Seitenwand (7) ist und durch das zweite Ende (8) der inneren Wand (5) verläuft, zwischen 1,78 und 1,82 mal dem Radius (r) des Bogens des Umfangs beträgt.

3. Bauteil (1) nach einem der vorhergehenden Ansprüche, **dadurch gekennzeichnet, dass** der Haken (3) eine längsverlaufende Verstärkungsrippe (10) an seiner äußeren Wand (11) aufweist.

4. Bauteil (1) nach Anspruch 1, **dadurch gekennzeichnet, dass** der Stab (4) an seinem Umfang mehrere aneinander ausgerichtete Scheiben (16) aufweist, deren Durchmesser größer als der Durchmesser der Bohrung (17) ist, und an seinem Umfang mindestens zwei aneinander ausgerichtete Scheiben (18) aufweist, deren Durchmesser im Wesentlichen dem Durchmesser der Bohrung (17) entspricht und die an dem freien Ende des Stabes angeordnet sind.

5. Bauteil (1) nach einem der vorhergehenden Ansprüche, **dadurch gekennzeichnet, dass** es aus Kunststoffmaterial gebildet ist.

## Revendications

1. Pièce (1) destinée à fixer des éléments tubulaires (13) présentant une circonférence sensiblement ronde en contact avec une surface de support sensiblement plate (15), comprenant une partie centrale (2) et au moins un crochet (3), ledit crochet (3) comprenant une paroi interne (5) ayant une forme d'arc de circonférence s'étendant entre une première extrémité (6) agencée sur une paroi latérale (7) de la partie centrale (2) et une seconde extrémité (8) agencée à l'emplacement de l'extrémité libre du crochet (3), la paroi interne (5) du crochet (3) et la paroi latérale (7) de la partie centrale (2) étant inclinées l'une par rapport à l'autre à l'emplacement de ladite première extrémité (6), la pièce comprenant une tige (4) destinée à la fixer dans un orifice d'une surface de support (15), ladite tige s'étendant depuis la partie inférieure de ladite partie centrale pour la fixer sur une surface de support (15), **caractérisée e ce que** l'angle (α) dudit arc de circonférence est compris entre 225 et 240 degrés et en ce que le crochet est agencé de telle façon que l'extrémité libre (8) du crochet (3) puisse entrer en contact avec ladite surface de support (15) lorsque la tige est pleinement insérée dans ladite surface (15) pour fixer un élément tubulaire (13), ladite paroi latérale (7) comprenant une surface plate étant inclinée par rapport à l'axe de la tige (4) et la distance (d) entre la paroi latérale (7) et un plan parallèle à ladite paroi latérale (7) passant à travers l'extrémité libre (18) de la paroi interne (5) du crochet est comprise entre 1,75 et 1,9 fois le rayon dudit arc de circonférence.

2. Pièce (1) selon l'une quelconque des revendications précédentes, **caractérisée en ce que** la distance (d) entre la paroi latérale (7) et un plan (P3) parallèle à ladite paroi latérale (7) passant à travers la seconde extrémité (8) de la paroi interne (5) est comprise entre 1,78 et 1,82 fois le rayon (r) dudit arc de circonférence.

3. Pièce (1) selon l'une quelconque des revendications précédentes, **caractérisée en ce que** le crochet (3) comprend une arête de renfort longitudinale (10) sur sa paroi externe (11).

4. Pièce (1) selon la revendication 1, **caractérisée en ce que** ladite tige (4) comprend une pluralité de disques de périmètres alignés (16) de diamètres supérieurs au diamètre de l'orifice (17), et au moins deux disques de périmètres alignés (18) de diamètre sensiblement égal à celui de l'orifice (17) agencé à l'extrémité libre de la tige.

5. Pièce (1) selon l'une quelconque des revendications précédentes, **caractérisée en ce qu'**elle est constituée de matériau plastique.
